Europäisches Patentamt

European Patent Office

Office européen des brevets

(11) Numéro de publication : **0 307 311 B1**

(12) # FASCICULE DE BREVET EUROPEEN

(45) Date de publication du fascicule du brevet :
**03.06.92 Bulletin 92/23**

(51) Int. Cl.$^5$ : **C01B 21/06, G21C 3/62**

(21) Numéro de dépôt : **88402257.5**

(22) Date de dépôt : **08.09.88**

(54) **Procédé de préparation de nitrure d'uranium et/ou de plutonium, utilisable comme combustible nucléaire.**

(30) Priorité : **11.09.87 FR 8712616**

(43) Date de publication de la demande :
**15.03.89 Bulletin 89/11**

(45) Mention de la délivrance du brevet :
**03.06.92 Bulletin 92/23**

(84) Etats contractants désignés :
**BE DE GB**

(56) Documents cités :
**DE-A- 1 928 525**
**DE-A- 2 725 206**
**US-A- 3 334 974**
**PATENT ABSTRACTS OF JAPAN, vol. 7, no. 100 (C-164)[1245], 28 avril 1983; & JP-A-58 26 012 (NIPPON GENSHIRYOKU KENKYUS-HO)16-02-1983**

(56) Documents cités :
**JOURNAL OF NUCLEAR MATERIALS, vol. 115, nos. 2 et 3, avril 1983, pages 331-333, North-Holland Publishing Co., Amsterdam, NL;Y. SUZUKI et al.: "Carbothermic synthesis of plutonium mononitride from the dioxide"**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Bardelle, Philippe 15 Lotissement Les Lubéronnes F-84120 Pertuis (FR)**
Inventeur : **Bernard, Hervé 9, Avenue Saint-Jérôme F-13100 Aix en Provence (FR)**

(74) Mandataire : **Mongrédien, André et al c/o BREVATOME 25, rue de Ponthieu F-75008 Paris (FR)**

EP 0 307 311 B1

## Description

La présente invention a pour objet un procédé de préparation de mononitrure d'uranium et/ou de plutonium, utilisable en particulier comme combustible dans les réacteurs nucléaires.

De façon plus précise, elle concerne un procédé de fabrication de mononitrure d'uranium et/ou de plutonium à partir du ou des oxydes correspondants par nitruration en présence de carbone.

Les mononitrures d'uranium et/ou de plutonium sont des composés denses et réfractaires à conductibilité thermique élevée qui se prêtent à une utilisation comme combustible dans les réacteurs nucléaires. On peut les utiliser en particulier sous forme de mélange homogène de nitrure d'uranium et de plutonium s'approchant autant que possible d'un oxyde mixte, dans les réacteurs rapides. Cependant, pour conserver une bonne compatibilité chimique du combustible avec les composants d'un coeur de réacteur nucléaire, il est important de minimiser la pollution du nitrure par le carbone et l'oxygène.

Or, les procédés connus de fabrication de mononitrures d'uranium et/ou de plutonium par nitruration en présence de carbone du ou des oxydes correspondants ont l'inconvénient, soit de conduire à une pollution du nitrure par le carbone et l'oxygène, soit d'être difficiles à mettre en oeuvre avec le plutonium.

Des procédés de fabrication de nitrure d'uranium et/ou de plutonium utilisant cette réaction de nitruration sont décrits en particulier dans le brevet DE-A-1 928 525 (United States Atomic Energy Commission), le brevet allemand DE-A-2 725 206 (Japan Atomic Energy Research Institute) et dans le brevet japonais JP-A-79-32 198 (Japan Atomic Energy Research Institute).

Le brevet allemand DE-A-1928525 décrit un procédé dans lequel on fait réagir un mélange de carbone et d'oxyde d'uranium et/ou d'oxyde de plutonium, contenant 8,6 à 10% en poids de carbone avec un courant d'azote à une température de 1500 à 1700°C et on élimine ensuite le carbone résiduel par abaissement de la température et maintien du produit dans un courant d'hydrogène à 1000 - 1200°C, en répétant ces opérations plusieurs fois, puis en refroidissant le produit obtenu sous un courant de gaz inerte. Ce procédé permet ainsi de terminer la réaction en une seule phase avec un refroidissement sous gaz neutre mais il présente certains inconvénients.

En effet, la réaction à température élevée dure très longtemps car la vitesse de réaction devient nettement plus lente au cours et vers la fin de la réaction ; par ailleurs, il est difficile de mélanger le ou les oxydes et le carbone en quantités chimiquement équivalentes ; de ce fait, le mononitrure d'uranium et/ou de plutonium produit contient généralement 3000 ppm d'oxygène et 1500 ppm de carbone, ce qui représente une pollution trop importante pour une utilisation dans un réacteur nucléaire.

Le brevet allemand DE-A-2 725 206 et le brevet japonais 7932198 décrivent un deuxième procédé de préparation du mononitrure d'uranium, dans lequel on part d'un mélange de bioxyde d'uranium et de carbone contenant un excès de carbone, on fait réagir ce mélange dans l'azote à une température de 1600 à 1700°C, puis on élimine le carbone excédentaire par un courant d'hydrogène. Généralement, ceci est effectué en 5 étapes successives et ce procédé est donc d'une grande complexité de mise en oeuvre. En revanche, il permet de limiter les teneurs en oygène et en carbone du mononitrure d'uranium obtenu à environ 1000 ppm pour $O_2$ et 2000 ppm pour C.

Le brevet allemand DE-A-2 725 206 décrit un troisième procédé de fabrication de mononitrure d'uranium à partir d'un mélange d'oxyde d'uranium et de carbone en excès par rapport à l'équivalent chimique, dans lequel on réalise simultanément la réaction et l'élimination du carbone en excédent, dans un flux de gaz contenant de l'azote et de l'hydrogène, à une température d'au moins 1400°C. En fin d'opération, on refroidit le produit sous un flux de gaz inerte ou sous vide. Le flux de gaz contenant de l'azote et de l'hydrogène contient 8 à 75% en volume d'hydrogène.

Ce procédé permet l'obtention de nitrure d'uranium ayant des teneurs très faibles en carbone et en oxygène, par exemple 310 ppm d'oxygène et 260 ppm de carbone lorsqu'on opère à une température de 1550°C.

Cependant, il a l'inconvénient d'exiger une teneur en carbone dans le mélange de départ d'au moins 13,4% en poids et de nécessiter l'utilisation d'un gaz hydrogéné contenant plus de 8% en volume d'hydrogène, ce qui n'est pas compatible avec le traitement du plutonium puisque celui-ci doit être effectué en boîte à gants et en atmosphère confinée.

Le brevet japonais JP-A-5432198 décrit un quatrième procédé de préparation du mononitrure d'uranium dans lequel on part d'un mélange d'oxyde d'uranium et de carbone contenant un excès de carbone, on fait réagir tout d'abord l'oxyde avec le carbone pour former un carbure d'uranium que l'on transforme ensuite en nitrure par chauffage à une température de 1400 à 1700°C, dans un courant d'ammoniac ou un courant mixte d'hydrogène et d'azote, on refroidit ensuite le produit obtenu sous atmosphère de gaz rare tel que l'hélium ou sous vide. Dans ces conditions, on peut abaisser la teneur en carbone et en oxygène à des valeurs allant de 90 à 440 ppm pour le carbone et de 230 à 570 ppm pour l'oxygène. Ce procédé permet ainsi de minimiser les teneurs en oxygène et en carbone ; cependant, il a l'inconvénient de nécessiter, comme le troisième procédé, l'emploi de teneurs élevées en carbone dans le mélange de départ et de teneurs en hydrogène dans le courant gazeux dépassant 8% en volume.

La présente invention a précisément pour objet un procédé de fabrication de mononitrure d'uranium et/ou de plutonium par nitruration d'un mélange du ou des oxydes correspondants avec du carbone, qui permet d'éviter ces inconvénients tout en conduisant à l'obtention de nitrure ayant des teneurs aussi faibles en oxygène et en carbone.

Le procédé, selon l'invention, de préparation d'un mononitrure de formule $U_{1-x} Pu_x N$ dans laquelle x est un nombre allant de 0 à 1, consiste à mélanger de l'oxyde d'uranium et/ou de l'oxyde de plutonium avec du carbone et à transformer ce mélange en le mononitrure correspondant par chauffage en présence d'azote, et il se caractérise en ce que l'on utilise un mélange de carbone, d'oxyde d'uranium et d'oxyde de plutonium contenant au plus 10% en poids de carbone, et en ce que l'on transforme ce mélange en le mononitrure correspondant par chauffage à une température de 1500 à 1600°C sous courant d'azote, puis sous courant d'azote et de gaz rare hydrogéné contenant moins de 8% en volume d'hydrogène.

L'emploi dans le procédé de l'invention d'un courant d'azote auquel on ajoute ensuite un gaz rare hydrogéné pour transformer le mélange en mononitrure permet d'opérer à une température au plus égale à 1600°C tout en réalisant une bonne nitruration sans qu'il soit nécessaire d'utiliser un excès important de carbone par rapport à la quantité stoechiométrique, comme c'était le cas dans les procédés de l'art antérieur.

Par ailleurs, il permet d'obtenir un produit dont les teneurs en carbone et en oxygène sont très faibles.

Selon un mode préféré de réalisation de l'invention, on réalise tout d'abord un chauffage du mélange d'oxydes et de carbone sous vide primaire, puis on poursuit le chauffage à la température désirée sous courant d'azote auquel on ajoute ensuite un gaz rare hydrogéné, et l'on réalise le refroidissement sous courant de gaz rare hydrogéné.

Dans ce cas, le procédé comprend les étapes successives suivantes :

a) préparation d'un mélange de carbone et d'oxyde d'uranium et/ou d'oxyde de plutonium, contenant au plus 10% en poids de carbone,

b) chauffage du mélange jusqu'à une température de 1350 à 1450°C sous vide primaire,

c) chauffage du mélange à une température de 1500 à 1600°C sous courant d'azote et maintien du mélange à cette température sous courant d'azote pour former le nitrure $U_{1-x}Pu_x N$ avec dégagement de CO,

d) maintien du mélange à la température de 1500 à 1600°C et addition au courant d'azote d'un gaz rare hydrogéné contenant moins de 8% en volume d'hydrogène, et

e) refroidissement du mélange sous courant de gaz rare hydrogéné contenant moins de 8% en volume d'hydrogène.

Le procédé de l'invention présente ainsi l'avantage d'utiliser :

– une teneur en carbone dans le mélange de départ qui se situe en-dessous du rapport molaire carbone/oxyde (s) utilisé dans les 3ème et 4ème procédés de l'art antérieur,

– des températures n'excédant pas 1600°C, et

– des courants gazeux contenant moins de 8% en volume d'hydrogène.

Ainsi, on évite les inconvénients des procédés de l'art antérieur qui permettaient d'obtenir des teneurs faibles en oxygène et en carbone.

Néanmoins, on obtient avec le procédé de l'invention, des teneurs en oxygène et en carbone très faibles, et le nitrure d'uranium ou le nitrure mixte d'uranium et de plutonium produit peut être utilisé comme combustible dans des réacteurs nucléaires.

Par ailleurs, ce procédé peut être facilement mis en oeuvre car il ne nécessite pas de nombreux changements dans la composition du courant gazeux.

Dans l'étape a) du procédé de l'invention, on prépare un mélange d'oxyde d'uranium et/ou d'oxyde de plutonium et de carbone que l'on met généralement sous la forme de pastilles. Dans ce but, on mélange de la poudre d'oxyde d'uranium et/ou de la poudre d'oxyde de plutonium avec de la poudre de graphite, puis on comprime le mélange de poudres en pastilles sous une pression de 0,2 à 0,5 MPa.

Le pourcentage pondéral du carbone dans le mélange est avantageusement de 8,8%. Lorsque l'on utilise de l'oxyde d'uranium et de l'oxyde de plutonium, on peut préparer simultanément ces poudres d'oxyde par broyage d'oxyde d'uranium reduit et d'oxyde de plutonium calciné dans un dispositif approprié tel qu'un broyeur à galets, de façon à obtenir des particules fines d'oxyde ayant par exemple une surface spécifique de 2 à 5 $m^2/g$. On ajoute ensuite le graphite dans un mélangeur approprié.

Lorsqu'on veut mettre le mélange sous la forme de pastilles, on comprime le mélange de poudres en utilisant par exemple une presse hydraulique à double effet. Ainsi, il n'est pas nécessaire d'utiliser un liant tel que du polyéthylène glycol comme c'était le cas dans le premier procédé de l'art antérieur.

Lorsqu'on utilise des oxydes d'uranium et de plutonium, ceux-ci peuvent être ajoutés dans un rapport quelconque. Toutefois, en vue d'une utilisation comme combustible dans un réacteur à neutrons rapides, le rapport pondéral $UO_2/PuO_2$ est généralement de 10/1 à 3/1, par exemple 4/1.

Dans la deuxième étape b), on chauffe le mélange obtenu dans la première étape a) jusqu'à une température de 1350 à 1450°C sous vide primaire ; ceci permet d'activer la réaction de nitruration par la synthèse préliminaire du carbure.

Dans l'étape suivante c), on poursuit le chauffage jusqu'à une température de 1500 à 1600°C sous courant d'azote et on maintient le mélange à cette température sous courant d'azote pour former le nitrure

$U_{1-x}Pu_xN$ avec un dégagement d'oxyde de carbone CO, ce qui dans le cas de l'uranium correspond à la réaction : $UO_2+2C+1/2N_2 \rightarrow UN+2CO$. La durée de cette étape est telle que le dégagement de CO ait fortement diminué. Généralement, on termine cette étape lorsque le dégagement de CO représente moins de 10% du dégagement maximal de CO au cours de cette étape.

On réalise alors l'étape d), c'est-à-dire que l'on maintient le mélange à la température de 1500 à 1600°C utilisée dans l'étape précédente c) mais que l'on ajoute au courant gazeux d'azote un gaz rare hydrogéné contenant moins de 8% en volume d'hydrogène. Il se produit dans ces conditions un nouveau dégagement de CO et l'on poursuit cette étape jusqu'à ce que l'on n'ait plus de dégagement de CO.

A ce moment là, on réalise l'étape e), c'est-à-dire que l'on interrompt le courant d'azote tout en maintenant le courant de gaz rare hydrogéné, puis on arrête le chauffage et on laisse le produit se refroidir sous courant de gaz rare hydrogéné contenant moins de 8% en volume d'hydrogène. Ceci permet de diminuer la teneur en carbone.

Le gaz rare utilisé peut être de l'hélium, de l'argon, du néon, du krypton. De préférence, on utilise de l'argon. La teneur en hydrogène du gaz rare hydrogéné est généralement de 5 à 8% en volume, de préférence de 5% en volume.

Dans l'étape d), l'introduction de gaz rare hydrogéné est effectuée de façon que le courant gazeux de gaz rare hydrogéné et d'azote comprenne de 25 à 75% en volume d'azote, par exemple 50% en volume d'azote et 50% en volume de gaz rare hydrogéné, ce qui représente 2,5% d'hydrogène dans le courant gazeux.

Le procédé de l'invention peut être mis en oeuvre dans un dispositif comprenant un four de réaction muni d'un circuit de circulation des gaz comportant un mélangeur de gaz à l'entrée et un moyen de contrôle de la composition des gaz sortant du four pour déterminer leur teneur en CO. Ce moyen de contrôle peut être constitué par un catharomètre.

On peut bien entendu utiliser tout type d'appareillage qui permette d'assurer un mélange approprié des gaz entrant dans le four et un contrôle du courant gazeux sortant du four.

D'autres caractéristiques et avantages de l'invention apparaîtront mieux à la lecture des exemples suivants de préparation de nitrure d'uranium et de plutonium de formule $U_{0,8}Pu_{0,2}N$ donnés bien entendu à titre illustratif et non limitatif.

EXEMPLE 1

Etape a)

Dans un broyeur à galets revêtu intérieurement de caoutchouc, tournant à la vitesse de 30 t/min environ, on réalise le co-broyage d'une poudre d'oxyde d'uranium réduit et d'oxyde de plutonium calciné présents dans un rapport pondéral $UO_2/PuO_2$ de 4/1. On réalise le broyage pendant 3h et l'on obtient ainsi un mélange co-broyé d'oxyde d'uranium et de plutonium ayant une surface spécifique de 4,8 $m^2$/g.

On ajoute alors de la poudre de graphite ayant une surface spécifique de 3,2 $m^2$/g en quantité telle que la teneur en carbone du mélange d'oxyde d'uranium, de plutonium et du carbone soit de 8,8% en poids. On réalise le mélange dans un cube tournant autour de l'une de ses diagonales principales, d'axe horizontal, pendant deux heures.

On comprime ensuite le mélange de poudres avec une presse hydraulique à double effet, sous une pression de 30 MPa pour obtenir des pastilles cylindriques de 14 mm de diamètre et de 3 mm de hauteur. La masse volumique des pastilles crues est de 5,2 $g/cm^3$.

Etape b)

Pour cette étape, on introduit les pastilles dans un four que l'on maintient sous vide primaire soit à environ $10^{-2}$ mmHg (1,33 Pa) et on porte le four à une température de 1350 à 1450°C.

Etape c)

On poursuit le chauffage des pastilles dans le four jusqu'à une température de 1550°C, en injectant de l'azote avec un débit de 0,8 $m^3h^{-1}$ et à une pression légèrement supérieure à la pression atmosphérique et on maintient les pastilles à la température choisie, sous courant d'azote, pour former le nitrure d'uranium et de plutonium. On analyse le courant gazeux sortant du four pour déterminer quelle est la valeur maximale du dégagement de CO. On trouve que celle-ci est de 2,5% en volume. Lorsque la réactivité baisse et que le dégagement de CO n'est plus que de 0,18% en volume, on réalise l'étape d).

Etape d)

On maintient toujours le mélange à la même température, mais on ajoute au courant d'azote un gaz rare hydrogéné constitué par de l'argon contenant 5% en volume d'hydrogène de façon à ce que le courant gazeux introduit dans le four contienne 50% en volume d'azote et 50% en volume d'argon hydrogéné, ce qui représente 2,5% en volume d'hydrogène dans le courant gazeux dont le débit et la pression restent constants. On poursuit cette introduction jusqu'à ce qu'il n'y ait plus d'oxyde de carbone CO dans le courant gazeux sortant du réacteur.

A ce moment là, on interrompt le courant gazeux d'azote tout en maintenant le courant d'argon hydrogéné, et on réalise l'étape e).

Etape e)

On arrête le chauffage en maintenant le courant d'argon hydrogéné et on laisse le mélange refroidir à la température ambiante sous ce courant d'argon hydrogéné.

En fin de refroidissement, on retire les pastilles du four on détermine leur masse volumique et on contrôle leur teneur en oxygène et en carbone.

Les résultats obtenus sont les suivants :
– masse volumique : 6,2 g/cm³,
– teneur en oxygène : 500 ppm,
– teneur en carbone : 700 ppm.

Ces teneurs sont un peu plus élevées que celles obtenues dans les troisième et quatrième procédés de l'art antérieur, mais elles sont bien meilleures que celles obtenues avec le premier et le second procédés sans qu'il soit nécessaire d'effectuer un cycle d'étapes compliqué. De plus, on utilise une teneur en carbone du mélange initial faible et une teneur en hydrogène du courant gazeux particulièrement basse.

EXEMPLE 2

On suit le même mode opératoire que dans l'exemple 1 sauf que l'on termine l'étape c) lorsque la teneur en CO du courant gazeux sortant du réacteur est de 0,2% et que dans l'étape d), on injecte de l'azote contenant 6% en volume d'hydrogène.

Dans ces conditions, les teneurs en carbone et en oxygène du nitrure obtenu sont les suivantes :
– teneur en oxygène : 320 ppm,
– teneur en carbone : 613 ppm.

Ainsi, on remarque que les teneurs en oxygène et en carbone diminuent lorsqu'on augmente la teneur en hydrogène du courant gazeux.

EXEMPLE 3

On répète le mode opératoire de l'exemple 1, sauf que l'on réalise en fin de l'étape d) un palier de traitement sous le courant d'argon à 5% d'hydrogène pendant 40 min, à 1550°C.

Dans ces conditions, les résultats obtenus sont les suivants :
– teneur en O : 430 ppm,
– teneur en C : 1054 ppm.

EXEMPLE 4

On suit le même mode opératoire que dans l'exemple 3 mais la durée du palier de traitement est de 10 min.

Dans ces conditions, les résultats obtenus sont les suivants :
– teneur en O : 424 ppm,
– teneur en C : 1366 ppm.

On remarque ainsi que l'effet réducteur de l'hydrogène sur le cabone est diminué mais que la teneur en oxygène n'est pratiquement pas affectée.

**Revendications**

1. Procédé de préparation d'un mononitrure de formule $U_{1-x}Pu_xN$ dans laquelle x est un nombre allant de 0 à 1, consistant à mélanger de l'oxyde d'uranium et/ou de l'oxyde de plutonium avec du carbone et à transformer ce mélange en le mononitrure correspondant par chauffage en présence d'azote, caractérisé en ce que l'on utilise un mélange de carbone, d'oxyde d'uranium et d'oxyde de plutonium contenant au plus 10% en poids de carbone, et en ce que l'on transforme ce mélange en le mononitrure correspondant par chauffage à une température de 1500 à 1600°C sous courant d'azote, puis sous courant d'azote et de gaz rare hydrogéné contenant moins de 8% en volume d'hydrogène.

2. Procédé selon la revendication 1, caractérisé en ce qu'il comprend les étapes successives suivantes :
   a) préparation d'un mélange de carbone et d'oxyde d'uranium et/ou d'oxyde de plutonium contenant au plus 10% en poids de carbone,
   b) chauffage du mélange jusqu'à une température de 1350 à 1450°C sous vide primaire,
   c) chauffage du mélange à une température de 1500 à 1600°C sous courant d'azote et maintien du mélange à cette température sous courant d'azote pour former le nitrure $U_{1-x}Pu_xN$ avec dégagement de CO,
   d) maintien du mélange à la température de 1500 à 1600°C et addition au courant d'azote de gaz rare hydrogéné contenant moins de 8% en volume d'hydrogène, et
   e) refroidissement du mélange en présence sous courant de gaz rare hydrogéné contenant moins de 8% en volume d'hydrogène.

3. Procédé selon la revendication 2, caractérisé en ce que dans l'étape a), on prépare un mélange d'oxyde d'uranium et/ou d'oxyde de plutonium et de carbone en mélangeant tout d'abord de la poudre d'oxyde d'uranium et/ou de la poudre d'oxyde de plutonium avec de la poudre de graphite, et en comprimant ensuite le mélange de poudres sous une pression de 0,2 à 0,5 MPa.

4. Procédé selon la revendication 2, caractérisé en ce que dans l'étape c), le maintien du mélange à la température de 1500 à 1600°C en présence du courant d'azote est effectué pendant une durée telle qu'à la fin de l'étape c), le dégagement de CO représente moins de 10% du dégagement maximal de CO au cours de cette étape.

5. Procédé selon la revendication 2, caractérisé en ce que la durée de l'étape d) est telle qu'à la fin de cette étape, il n'y ait plus de dégagement de CO.

6. Procédé selon la revendication 2, caractérisé en ce que dans l'étape d), le courant de gaz rare hydrogéné et d'azote contient de 25 à 75% en volume d'azote.

7. Procédé selon l'une quelconque des revendications 1, 2 et 6, caractérisé en ce que le gaz rare est l'argon.

8. Procédé selon l'une quelconque des revendications 1, 2, 5, 6 et 7, caractérisé en ce que le gaz rare hydrogéné contient 5 à 8% en volume d'hydrogène.


## Claims

1. Process for the preparation of a mononitride of formula $U_{1-x}Pu_xN$, in which x is a number between 0 and 1, consisting of mixing the uranium oxide and/or plutonium oxide with carbon and transforming said mixture into the corresponding mononitride by heating in the presence of nitrogen, said process being characterized in that use is made of a mixture of carbon, uranium oxide and plutonium oxide containing at the most 10% by weight of carbon and in that said mixture is transformed into the corresponding mononitride by heating at a temperature of 1500 to 1600°C under a nitrogen flow and then under a flow of nitrogen and hydrogenated rare gas containing less than 8% by volume of hydrogen.

2. Process according to claim 1, characterized in that it comprises the following successive stages:

a) preparation of a mixture of carbon and uranium oxide and/or plutonium oxide containing at the most 10% by weight of carbon,

b) heating the mixture to a temperature of 1350 to 1450°C under a partial vacuum,

c) heating the mixture to a temperature of 1500 to 1600°C under a nitrogen stream and maintaining the mixture at said temperature under the nitrogen stream in order to form the nitride $U_{1-x}Pu_xN$ with the release of CO,

d) maintaining the mixture at a temperature of 1500 to 1600°C and addition to the nitrogen stream of a hydrogenated rare gas containing less than 8% by volume of hydrogen and

e) cooling the mixture under a hydrogenated rare gas stream containing less than 8% by volume of hydrogen.

3. Process according to claim 2, characterized in that in stage a), a mixture of uranium oxide and/or plutonium oxide and carbon is prepared by firstly mixing the uranium oxide powder and/or the plutonium oxide powder with the graphite powder and then compressing the powder mixture under a pressure of 0.2 to 0.5 MPa.

4. Process according to claim 2, characterized in that in stage c), the mixture is maintained at a temperature of 1500 to 1600°C in the presence of a nitrogen flow for a time such that at the end of stage c), the release of CO represents less than 10% of the maximum CO release during said stage.

5. Process according to claim 2, characterized in that the duration of stage d) is such that at the end of this stage, there is no further CO release.

6. Process according to claim 2, characterized in that in stage d), the stream of hydrogenated rare gas and nitrogen contains 25 to 75% by volume of nitrogen.

7. Process according to any one of the claims 1, 2 and 6, characterized in that the rare gas is argon.

8. Process according to any one of the claims 1, 2, 5, 6 and 7, characterized in that the hydrogenated rare gas contains 5 to 8% by volume of hydrogen.


## Patentansprüche

1. Verfahren zum Herstellen eines Mononitrids der Formel $U_{1-x}Pu_xN$, bei dem x eine Zahl zwischen 0 und 1 ist, das darin besteht Uranoxyd und/oder Plutoniumoxyd mit Kohlenstoff zu mischen und diese Mischung durch Erwärmen in Anwesenheit von Stickstoff in das entsprechende Mononitrid umzuwandeln, dadurch gekennzeichnet, daß man eine Mischung von Kohlenstoff, Uranoxyd und Plutoniumoxyd mit wenigstens 10 Gewichtsprozent Kohlenstoff verwendet und daß man diese Mischung in das entsprechende Mononitrid durch Erwärmen auf eine Temperatur von 1500 bis 1600°C unter einem Stickstoffstrom und dann unter einem Stickstoff- und unter hydrogenisierten Edelgasstrom mit wenigstens 8 Volumenprozent Wasserstoff umwandelt.

2. Verfahren nach Anspruch 1, dadurch gekennzeichnet, daß die folgenden, sukzessiven Verfahrensschritte umfaßt:

a) Vorbereiten einer Mischung aus Kohlenstoff und Uran- und/oder Plutoniumoxyd mit höchstens 10 Gewichtsprozent Kohlenstoff,

b) Erwärmen der Mischung auf eine Temperatur von 1350 bis 1450°C unter einem Primärvakuum,

c) Erwärmen der Mischung auf eine Temperatur von 1500 bis 1600°C unter einem Stickstoffstrom und Halten der Mischung auf dieser Temperatur unter einem Stickstoffstrom, um das Nitrid $U_{1-x}Pu_xN$ unter Freisetzung von CO zu erzeugen,

d) Halten der Mischung auf der Temperatur von 1500 bis 1600°C und Zufügen eines hydrogenisierten Edelgases mit wenigstens 8 Volumenprozent Wasserstoff zu dem Stickstoffstrom, und

e) Abkühlen der vorhandenen Mischung unter einem Strom aus hydrogenisiertem Edelgas mit wenigstens 8 Volumenprozent Wasserstoff.

3. Verfahren nach Anspruch 2, dadurch gekennzeichnet, daß man im Verfahrensschritt a) eine Mischung aus Uran- und/oder Plutoniumoxyd und aus Kohlenstoff herstellt, indem man zunächst Uran- und-/oder Plutoniumoxydpulver mit Graphitpulver vermischt und indem man dann die Pulvermischung unter einem Druck von 0,2 bis 0,5 MPa komprimiert.

4. Verfahren nach Anspruch 2, dadurch gekennzeichnet, daß im Verfahrensschritt c) das Halten der Mischung bei der Temperatur von 1500 bis 1600°C in Gegenwart eines Stickstoffstroms während einer solchen Dauer durchgeführt wird, daß am Ende des Verfahrensschritts c) das Entweichen von CO weniger als 10% des maximalen Entweichens von CO während dieses Verfahrensschritts beträgt.

5. Verfahren nach Anspruch 2, dadurch gekennzeichnet, daß die Dauer des Verfahrensschritts d) derart ist, daß es am Ende dieses Verfahrensschritts kein Entweichen von CO mehr gibt.

6. Verfahren nach Anspruch 2, dadurch gekennzeichnet, daß im Verfahrensschritt d) der hydrogenisierte Edelgas- und Stickstoffstrom 25 bis 75 Volumenprozent Stickstoff enthält.

7. Verfahren nach einem der Ansprüche 1, 2 und 6, dadurch gekennzeichnet, daß das Edelgas Argon ist.

8. Verfahren nach einem der Ansprüche 1, 2, 5, 6 und 7, dadurch gekennzeichnet, daß das hydrogenisierte Gas 5 bis 8 Volumenprozent Wasserstoff enthält.